Europäisches Patentamt

European Patent Office

Office européen des brevets

(11) Publication number: **0 433 068 A2**

# EUROPEAN PATENT APPLICATION

(21) Application number: **90313583.8**

(22) Date of filing: **13.12.90**

(51) Int. Cl.⁵: **C08G 18/10,** C08G 18/16,
C08G 18/69, C08K 5/02,
C09K 3/10

(30) Priority: **13.12.89 GB 8928157**

(43) Date of publication of application:
**19.06.91 Bulletin 91/25**

(84) Designated Contracting States:
**DE ES FR GB IT SE**

(71) Applicant: **BOSTIK LIMITED**
**Ulverscroft Works Ulverscroft Road**
**Leicester LE4 6BW(GB)**
(84) **GB**

Applicant: **BOSTIK GMBH**
**Gattenhoferweg 36 Postfach 1260**
**W-6370 Oberursel/Taunus(DE)**
(84) **DE IT**

Applicant: **BOSTIK FRANCE SA**
**RN 19**
**F-77170 Coubert(FR)**
(84) **ES FR**

Applicant: **BOSTIK AB**
**Strandbadsvaegen**
**S-25229 Helsingborg(SE)**
(84) **SE**

(72) Inventor: **Gilch, Heinz Gerhard**
**Hölderlinweg 17a**
**W-6380 Bad Homburg(DE)**

(74) Representative: **Harrison, Gordon Donald**
**FORRESTER & BOEHMERT**
**Widenmayerstrasse 4/l**
**W-8000 München 22(DE)**

(54) **Chemically -curing two-part polyurethane composition.**

(57) A chemically-curing, two-part polyurethane composition for use as an adhesive/sealant in double glazing comprising Part A comprising a prepolymer based on hydroxyl-terminated polybutadiene and Part B comprising polyisocyanates wherein Part B includes a plasticiser comprising a halogenated hydrocarbon, preferably a chlorinated paraffin to enhance resistance of the cured mix to argon permeation.

## "CHEMICALLY-CURING TWO-PART POLYURETHANE COMPOSITION"

Description of the Invention

The present invention relates to a chemically-curing, two-part polyurethane composition particularly for use as an adhesive/sealant in double-glazing (insulating glass) applications.

Double-glazing units usually comprise a pair of translucent or transparent sheets held in spaced apart relationship by spacer elements located between the sheets, usually around the edges. The edges of the sheets are sealed by an adhesive/sealant composition which usually covers the spacer elements and serves to seal the space between the pair of sheets. To achieve satisfactory performance for such units, the adhesive/sealant must possess good adhesion to glass and also preserve the nature of the inter-sheet space. Moisture must be rigorously excluded from the space, and so it is necessary for the sealant to resist moisture vapour transition. One of the recent developments in the field of insulating glass is the gas-filled unit showing a lower heat and/or sound transmition rate. To maintain these properties over a long period, the sealant must have a low gas permeation rate, particularly for argon, which is commonly used.

Low gas permeation rates can in fact be achieved using sealants based on cured liquid polysulphides but these cannot reach the low levels of moisture vapour transition rate achieved by cured polyurethane sealants, based for example on hydroxyl-terminated polybutadiene and polyisocyanates.

It is an object of the present invention to provide a chemically-curing two-part polyurethane sealant composition having enhanced resistance to the permeation of non-polar gases such as argon whilst retaining low vapour transition rate of (polar) moisture vapour.

Such two-part polyurethane compositions comprise Part A which comprises a prepolymer based on hydroxyl-terminated polybutadiene and which, to form the composition, is mixed with Part B comprising polyisocyanates.

We have found that argon permeation of such polyurethane compositions may be greatly reduced by the incorporation of high-boiling halogenated plasticisers, particularly chlorinated paraffins.

According to the present invention, a chemically-curing, two-part, polyurethane composition comprising Part A comprising a catalyst and a prepolymer based on hydroxyl-terminated polybutadiene which to form the composition is mixed with Part B comprising polyisocyanates is characterised in that a plasticiser comprising a halogenated hydrocarbon, preferably chlorinated paraffin, is included in Part B.

Although it is surprising that relatively small amounts of halogenated hydrocarbon plasticiser are so effective, generally the higher the chlorine content of the plasticiser and the higher the proportion of halogenated hydrocarbon in the sealant, the more effective it is in reducing argon permeation. As much chlorinated hydrocarbon plasticiser should therefore be used as can be incorporated into the sealant composition, with as high a chlorine content as possible.

The preferred chlorinated paraffins are straight chain chlorinated paraffins with from 10 to 20 carbon atoms and especially preferred are those with from 14 to 17 carbon atoms. However, commercially available mixtures of different chlorinated paraffins such as those sold under the trade names CERECLOR (ICI) and HORDAFLEX (Hoechst) can be used.

The halogen content of the halogenated plasticisers used in the invention can vary from 30 wt% up to 70 wt% but the preferred range is 50wt% to 60wt%. The halogenated plasticisers are effective in the range of 3-50%wt of the sealant to reduce argon permeability while retaining the general properties required for double glazing sealants to meet the standards of performance now required from double-glazed units.

However because Part B forms a smaller proportion of the final mix than Part A, incorporation of the halogenated hydrocarbon plasticiser into Part B does place a limit on the proportion of the halogenated hydrocarbon plasticiser in the cured sealant, and hence a limit on the reduction of argon permeation which may be achieved. However, with the halogenated plasticiser in part B of the composition and the catalyst in part A it is possible to use a variety of known polyurethane catalysts, such as for example amines and metal catalysts using tin, bismuth and mercury. On the other hand reduced stability of the composition, as evidenced by adhesion retention characteristics of the mixed parts, results if halogenated plasticisers are incorporated in part A with many known catalysts. Incoportating the halogenated plasticiser in part B whilst the catalyst is in part A overcomes or reduces this problem thus allowing flexibility in the selection of catalyst to be used.

In order that the present invention may be better understood, preferred examples will now be described in greater detail. All proportions in the Examples are parts by weight.

|  | EXAMPLE 1 | COMPARATIVE EXAMPLE |
|---|---|---|
| **PART A:** | | |
| Chalk | 58 | 58 |
| Hydroxyl -terminated polybutadiene* | 22 | 22 |
| Plasticiser -benzyl octyl phthalate | 20 | 20 |
| Catalyst-DBTL (dibutyl tin laurate) | 0.002 | 0.002 |
| *poly bd R45 HT (ATO-Chem) | | |
| **PART B:** | | |
| Liquid MDI -methylene diphenyl diisocyanate | 50 | 50 |
| Fumed silica | 3.0 | 3.0 |
| Carbon black | 1 | 1 |
| Plasticiser -clorinated paraffin (chlorine 58wt%) | 46 | - |
| Plasticiser -benzyl octyl phthalate | - | 46 |

The mixing ratio used for testing these Examples in all cases was Part A: Part B, 100:7.6 by weight.

For the Comparative Example, argon permeation measured on a cured film of 2mm thickness was:

$$14 \times 10^{-8} \quad \frac{cm^2}{s.bar}$$

whereas argon permeation of the Example of the present invention was measured as:

$$12.5 \times 10^{-8} \quad \frac{cm^2}{s.bar.}$$

The storage stability was estimated by measuring the time taken until there is no adhesion of the mixed composition to a film of polyethylene when applied at room temperature. For the Example according to the present invention this value was unchanged (2 hours) measured before storage and after storage for seven days at 70°C.

Similar levels of storage stability were shown by Examples 2, 3 and 4 when other catalysts were substituted for the dibutyle tin laurate of Example 1:-

|  | EXAMPLE 2 | EXAMPLE 3 | EXAMPLE 4 |
|---|---|---|---|
| **PART A:** | | | |
| Chalk | 58 | 58 | 58 |
| Hydroxyl -terminated polybuta- diene* | 22 | 22 | 22 |
| Plasticiser DOP (dioctyl phthalate) | 20 | 20 | 20 |
| Catalyst | 0.05 x Coscat 83 | 0.09 + Texacat DPA | 0.05 mercury ester |

* poly bd R 45 HT (Ato-Chem)

x Bi-octoate

+ amine

4

PART B:

| | | | |
|---|---|---|---|
| liquid MDI | 50 | 50 | 50 |
| Fumed silica | 3.0 | 3.0 | 3.0 |
| Carbon-black | 1.0 | 1.0 | 1.0 |
| Plasticiser-chlorinated paraffin (Chlorine 58wt%) | 46 | 46 | 46 |

Again the mixing ratio used was:
    Part A: Part B, 100:7.6 by weight

| | | | |
|---|---|---|---|
| Pre-storage tack free time | 3 hours | 1hr 40m | 1hr50m |
| Post-storage* tack free time | 3hr 20m | 1hr 50m | 2 hours |

* 7 days at 70°C.

Claims

1. A chemically-curing, two-part polyurethane composition comprising Part A comprising a catalyst and a prepolymer based on hydroxyl-terminated polybutadiene and which, to form the composition, is mixed with Part B comprising polyisocyanates characterised in that a plasticiser comprising a halogenated hydrocarbon is included in Part B.

2. A two-part polyurethane composition according to Claim 1 wherein the plasticiser is a chlorinated paraffin.

3. A two-part polyurethane composition according to Claim 2 wherein the paraffin comprises one or more straight chain paraffins with a chain length of between 10 and 20 carbon atoms.

4. A two-part polyurethane composition according to Claim 3 wherein the paraffin comprises one or more straight chain paraffins with a chain length of between 14 and 17 carbon atoms.

5. A two-part polyurethane composition according to any one of the preceding claims, wherein the halogen content of the plasticiser is from 30wt% to 70wt%.

6. A two-part polyurethance composition according to Claim 4 wherein the halogen content of the plasticiser is from 50 to 60 wt%.

7. A two-part polyurethane composition according to any one of the preceding claims containing from 3-50wt% of the said plasticiser.

8. A two-part polyurethane composition according to any one of the preceding claims wherein the catalyst in Part A comprises an amine catalyst.

9. A two-part polyurethane composition according to any one of the preceding claims wherein the catalyst in Part A comprises a metal catalyst using tin, bismuth or mercury.

10. A polyisocyanate composition for mixing with a prepolymer composition to form a polyurethane sealant, characterised by the incorporation of a halogenated hydrocarbon as a plasticiser.

11. A method of reducing the rate of argon permeation through a seal in an argon-filled double glazing unit characterised by the step of forming said seal from a chemically curing two-part polyurethane composition as characterised in any one of Claims 1 to 9.

6